(19) Europäisches Patentamt
European Patent Office
Office européen des brevets

(11) EP 4 700 065 A1

# (12) EUROPEAN PATENT APPLICATION
published in accordance with Art. 153(4) EPC

(43) Date of publication:
**25.02.2026 Bulletin 2026/09**

(21) Application number: **24792622.3**

(22) Date of filing: **15.04.2024**

(51) International Patent Classification (IPC):
***C08G 69/26*** *(2006.01)*

(52) Cooperative Patent Classification (CPC):
**C08G 69/26**

(86) International application number:
**PCT/JP2024/014944**

(87) International publication number:
**WO 2024/219347 (24.10.2024 Gazette 2024/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **18.04.2023 JP 2023068057**

(71) Applicant: **UBE Corporation**
**Ube-shi, Yamaguchi 755-8633 (JP)**

(72) Inventors:
- **FURUYA, Toshio**
**Ube-shi, Yamaguchi 755-8633 (JP)**
- **IRISA, Yuma**
**Ube-shi, Yamaguchi 755-8633 (JP)**
- **YABU, Naoyasu**
**Ube-shi, Yamaguchi 755-8633 (JP)**

(74) Representative: **Hoffmann Eitle**
**Patent- und Rechtsanwälte PartmbB**
**Arabellastraße 30**
**81925 München (DE)**

## (54) COPOLYAMIDE RESIN, AND COMPOSITION, MOLDED ARTICLE, FILM AND MONOFILAMENT CONTAINING SAME

(57) Provided are a copolyamide resin having excellent transparency due to low enthalpy change ΔH upon melting and low crystallinity and produced using a biomass-derived raw material; a composition containing the copolyamide resin; and a molded article, such as a film or a monofilament, containing the copolyamide resin. The present invention can contribute to achieving, for example, Goal 12 of Sustainable Development Goals (SDGs).

A copolyamide resin containing a structural unit A derived from a reaction product of equimolar amounts of pentamethylenediamine and adipic acid; and a structural unit B derived from a reaction product of equimolar amounts of pentamethylenediamine and sebacic acid, wherein the mass ratio of the structural unit A/the structural unit B is from 85/15 to 15/85.

EP 4 700 065 A1

## Description

### Technical Field

The present invention relates to a copolyamide resin, in particular, a copolyamide resin produced using a biomass-derived raw material.

### Background Art

Polyamides are polymers composed of an assembly of structural units containing an amide bond. The structural units of polyamides are generally derived from an aminocarboxylic acid or a lactam, or from a diamine and a dicarboxylic acid. In particular, among these compounds, an aliphatic polyamide resin derived from an aliphatic chemical species has various beneficial properties as a resin, such as chemical resistance, toughness, heat resistance, and oil resistance. Therefore, an aliphatic polyamide resin is useful as a raw material for molded articles for various applications. For example, the aliphatic polyamide resin is used in packaging films required to have pinhole resistance, gas barrier properties, and the like, particularly in the field of food packaging, as a monolayer film or a base material for a laminate film and as a material for forming multilayer films through coextrusion with another resin.

One advantage of the resin is that selecting a monomer or using a plurality of monomers can control the properties of the resin in various ways. A copolyamide resin that provides a molded article having properties suitable for applications is produced by combining two or more types of structural units (Patent Literature 1).

Polyamide resins provide molded articles having various excellent properties. Thus, homopolymers of any of various structural units or copolymers of combinations of structural units are produced. Many monomers serving as raw materials for polyamide resins are industrially produced from fossil materials. For example, ε-caprolactam, a well-known raw material for nylon (trade name), is synthesized from benzene derived from naphtha. Along with the growing environmental awareness in recent years, leading to a demand for the reduction of carbon dioxide emissions, there is also a demand for raw materials for polyamide resins to be shifted from fossil materials to biomass-derived raw materials. Examples of known biomass-derived compounds that can be raw materials for polyamides include 1,5-pentanediamine, which can be obtained from starch or sugar cane by enzyme reaction, yeast reaction, fermentation reaction, or the like. In Patent Literature 2, 1,5-pentanediamine is used as a raw material in an attempt to produce a polyamide resin containing a small amount of impurities derived from a biomass raw material. In Patent Literature 3 and 4, 1,5-pentanediamine is used as a raw material in an attempt to produce a polyamide resin for a large-sized molded article having improved stability under retained heated conditions.

### Citation List

### Patent Literature

Patent Literature 1: WO 2022/071013
Patent Literature 2: WO 2015/076233
Patent Literature 3: JP 2006-348057 A
Patent Literature 4: JP 2007-332353 A

## Summary of Invention

### Technical Problem

Replacement of products known in the art with resins derived from biomass raw materials is one of the efforts to construct a sustainable society on a global scale. Also, in Japan, legal provisions have been made, such as setting a certain standard for the content of bio-based polymers, and demonstration experiments are underway to establish recycling processes and reduce $CO_2$. Meanwhile, replacement of resin raw materials may often change the molecular structures of the resins, and thus the resulting change in physical properties is an unavoidable problem. Consumers have a strong interest in resin quality as well as price and there is a strong demand for resins with quality equivalent to or better than that of resins to be replaced.

Molded articles obtained using the polyamide resins described in Patent Literatures 1 to 4 exhibit certain mechanical properties (such as tensile elastic modulus and tensile elongation) but have problems of high enthalpy change $\Delta H$ upon melting of the resin and poor transparency.

Thus, an object of the present invention is to provide a copolyamide resin having excellent transparency due to low enthalpy change ΔH upon melting and low crystallinity and produced using a biomass-derived raw material; a composition containing the copolyamide resin; and a molded article, such as a film or a monofilament, containing the copolyamide resin.

Solution to Problem

The present invention relates to [1] to [7] described below.

[1] A copolyamide resin containing:

a structural unit A derived from a reaction product of equimolar amounts of pentamethylenediamine and adipic acid, and represented by Formula (A):

[Chem. 1]

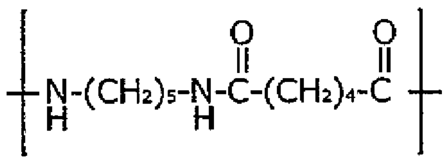

(A)

and

a structural unit B derived from a reaction product of equimolar amounts of pentamethylenediamine and sebacic acid, and represented by Formula (B):

[Chem. 2]

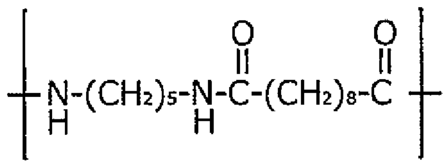

(B)

wherein

a mass ratio of the structural unit A/the structural unit B is from 85/15 to 15/85.

[2] The copolyamide resin according to [1], wherein the copolyamide resin has a melting point of from 170 to 240°C as measured by DSC.
[3] The copolyamide resin according to [1] or [2], wherein the copolyamide resin has a crystallization temperature of from 115 to 195°C as measured by DSC.
[4] A polyamide resin composition containing the copolyamide resin described in any one of [1] to [3].
[5] A molded article containing the copolyamide resin described in any one of [1] to [3].
[6] A film containing the copolyamide resin described in any one of [1] to [3].
[7] A monofilament containing the copolyamide resin described in any one of [1] to [3].

Advantageous Effects of Invention

According to the present invention, there can be provided a copolyamide resin having excellent transparency due to low enthalpy change ΔH upon melting and low crystallinity and produced using a biomass-derived raw material; a composition containing the copolyamide resin; and a molded article, such as a film or a monofilament, containing the copolyamide resin.

Description of Embodiments

In the present invention, the term "polyamide resin" means a resin having an acid amide bond (-CONH-) in the

main chain and produced using, as a raw material, a lactam, an aminocarboxylic acid, or a nylon salt composed of a diamine and a dicarboxylic acid through polymerization or copolymerization by a known method, such as melt polymerization, solution polymerization, or solid-phase polymerization. As long as the effects of the present invention are not impaired, the polyamide resin may be blended with an additional component to produce a polyamide resin composition.

The copolyamide resin of the present invention contains:

a structural unit A derived from a reaction product of equimolar amounts of pentamethylenediamine and adipic acid, and represented by Formula (A):

[Chem. 3]

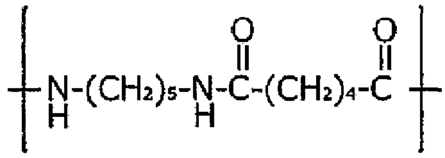

(A)

and

a structural unit B derived from a reaction product of equimolar amounts of pentamethylenediamine and sebacic acid, and represented by Formula (B):

[Chem. 4]

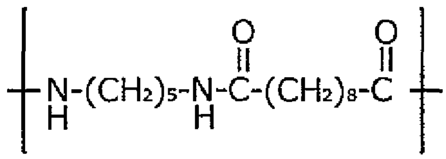

(B)

wherein

the mass ratio of the structural unit A/the structural unit B is from 85/15 to 15/85. The copolyamide resin contains the structural units A and B in the above-described proportions. Therefore, while the bio proportion is increased, the enthalpy change ΔH upon melting can be reduced, and the crystallinity can be reduced and the transparency can be improved.

Structural Unit A

The structural unit A is a unit derived from a reaction product of equimolar amounts of pentamethylenediamine and adipic acid, and represented by Formula (A). The structural unit A is formed by polymerizing an equimolar salt or an equimolar mixture of pentamethylenediamine and adipic acid. The pentamethylenediamine and adipic acid constituting the unit may be condensed directly or may be condensed via another unit or a diamine or dicarboxylic acid constituting another unit. Since the copolyamide resin contains the structural unit A, the time until solidification can be shortened during heat molding, and the bio proportion can be increased while the handling properties and work efficiency are improved.

Examples of the pentamethylenediamine include 1,5-pentamethylenediamine, 1,4-pentamethylenediamine, and 1,3-pentamethylenediamine, and 1,5-pentamethylenediamine is preferred from the viewpoints of easy availability and the strength of the resulting polyamide resin. One type of pentamethylenediamine may be used alone, or two or more types thereof may be used in combination.

Pentamethylenediamine may be derived from a fossil material or from a biomass-derived raw material, but is preferably derived from a biomass-derived raw material from the viewpoint of increasing the bio proportion of the copolyamide resin.

The biomass-derived pentamethylenediamine to be used can be, for example, pentamethylenediamine obtained by a production method disclosed in WO 2015/076233, JP 2006-348057 A, JP 2007-332353 A, JP 2002-223771 A, JP 2004-000114 A, JP 2004-208646 A, JP 2004-290091 A, JP 2004-298034 A, JP 2002-223770 A, JP 2004-222569 A, JP 2005-6650 A, JP 2019-154313 A, JP 2019-205423 A, or the like.

Specifically, it is known that 1,5-pentamethylenediamine can be produced through decarboxylation of lysine by enzymatic reaction. For example, 1,5-pentamethylenediamine can be produced from lysine using lysine decarboxylase, a

cell producing lysine decarboxylase, a treated product of the cell, a microorganism expressing lysine decarboxylase, or the like. The enzymatic decarboxylation reaction of lysine can also be performed while an acid such as adipic acid is added to a lysine solution so as to maintain the pH suitable for the enzymatic decarboxylation reaction.

Adipic acid may be derived from a fossil material or from a biomass-derived raw material. From the viewpoint of easy availability, adipic acid is preferably derived from a fossil material.

Structural Unit B

The structural unit B is a unit derived from a reaction product of equimolar amounts of pentamethylenediamine and sebacic acid, and represented by Formula (B). The structural unit B is formed by polymerizing an equimolar salt or an equimolar mixture of pentamethylenediamine and sebacic acid. The pentamethylenediamine and sebacic acid constituting the unit may be condensed directly or may be condensed via another unit or a diamine or dicarboxylic acid constituting another unit. Since the copolyamide resin contains the structural unit B, the bio proportion can be increased while the water absorbability of a molded article is reduced.

Examples of the pentamethylenediamine include the same as those exemplified for the structural unit A, and the preferred aspect is also the same.

Sebacic acid may be derived from a fossil material or from a biomass-derived raw material, but is preferably derived from a biomass-derived raw material from the viewpoint of increasing the bio proportion of the copolyamide resin.

The biomass-derived sebacic acid can be synthesized, for example, from ricinoleic acid triglyceride, which is a main component of castor oil obtained from the seeds of castor bean.

Mass Ratio of Structural Unit A and Structural Unit B

The mass ratio of the structural unit A/the structural unit B in the copolyamide resin is from 85/15 to 15/85, preferably from 80/20 to 20/80, more preferably from 70/30 to 25/75, even more preferably from 60/40 to 30/70, and particularly preferably from 55/45 to 35/65. Setting the mass ratio of the structural unit A/the structural unit B to 15/85 or more shortens the time until solidification during heat molding, improves the handling properties and work efficiency, and also improves the transparency of a molded article. Setting the mass ratio to 85/15 or less reduces the water absorption of a molded article and improves the transparency.

The total amount of the structural unit A and the structural unit B is preferably from 80 to 100 mass%, more preferably from 90 to 100 mass%, and even more preferably from 95 to 100 mass% relative to 100 mass% of the copolyamide resin. In an aspect, the total amount of the structural unit A and the structural unit B is 100 mass% relative to 100 mass% of the copolyamide resin.

Additional Structural Unit

The copolyamide resin may contain a structural unit other than the structural unit A and the structural unit B as long as the properties of the copolyamide resin are not impaired. Examples of such a structural unit include a structural unit derived from a reaction product of equimolar amounts of pentamethylenediamine and a dicarboxylic acid other than adipic acid and sebacic acid; a structural unit derived from a reaction product of equimolar amounts of a diamine other than pentamethylenediamine and adipic acid or sebacic acid; a structural unit derived from a reaction product of equimolar amounts of a diamine other than pentamethylenediamine and a dicarboxylic acid other than adipic acid and sebacic acid; and a structural unit derived from an aminocarboxylic acid and/or a lactam.

Examples of the diamine other than pentamethylenediamine include aliphatic diamines, such as ethylenediamine, trimethylenediamine, tetramethylenediamine, hexamethylenediamine, heptamethylenediamine, octamethylenediamine, nonamethylenediamine, decamethylenediamine, undecamethylenediamine, dodecamethylenediamine, tridecanediamine, tetradecanediamine, pentadecanediamine, hexadecanediamine, heptadecanediamine, octadecanediamine, nonadecanediamine, eicosanediamine, 2-methyl-1,8-octanediamine, and 2,2,4/2,4,4-trimethylhexamethylenediamine; and alicyclic diamines, such as 1,3-/1,4-cyclohexyldiamine, bis(4-aminocyclohexyl)methane, bis(4-aminocyclohexyl)propane, bis(3-methyl-4-aminocyclohexyl)methane, bis(3-methyl-4-aminocyclohexyl)propane, 1,3-/1,4-bisaminomethylcyclohexane, 5-amino-2,2,4-trimethyl-1-cyclopentanemethylamine, 5-amino-1,3,3-trimethylcyclohexanemethylamine, bis(aminopropyl)piperazine, bis(aminoethyl)piperazine, and norbornanedimethylenediamine.

Examples of the dicarboxylic acid other than adipic acid and sebacic acid include aliphatic dicarboxylic acids, such as oxalic acid, malonic acid, succinic acid, glutaric acid, pimelic acid, suberic acid, azelaic acid, undecanedioic acid, dodecanedioic acid, tridecanedioic acid, tetradecanedioic acid, pentadecanedioic acid, hexadecanedioic acid, heptadecanedioic acid, octadecanedioic acid, nonadecanedioic acid, and eicosanedioic acid; and alicyclic dicarboxylic acids, such as 1,3-/1,4-cyclohexanedicarboxylic acid, dicyclohexanemethane-4,4'-dicarboxylic acid, and norbornanedicarboxylic acid.

Examples of the aminocarboxylic acid include 6-aminocaproic acid, 7-aminoheptanoic acid, 9-aminononanoic acid, 10-aminodecanoic acid, 11-aminoundecanoic acid, and 12-aminododecanoic acid. Examples of the lactam include ε-caprolactam, enantholactam, decalactam, undecalactam, dodecalactam, α-pyrrolidone, and α-piperidone.
The amount of each structural unit of the copolyamide resin corresponds to the amount of each component charged at the time of production of the copolyamide resin. The amount can also be determined using the resulting copolyamide resin as it is or after hydrolysis of the copolyamide resin, by measurement such as high performance liquid chromatography, gas chromatography, gas chromatography/atomic emission detection (GC/AED), or gel permeation chromatography. The amount of each structural unit of the copolyamide resin described in the present specification and claims is calculated from the charging proportions (mass proportions) of raw materials on the assumption that the raw materials of the copolyamide resin are completely reacted.
In the Examples, in consideration of elimination of condensed water by polymerization, the amount of each structural unit was calculated based on a contribution of 100.18 (= 102.18 - 2.00) g/mol from the molecular weight 102.18 of 1,5-pentamethylenediamine, a contribution of 112.14 (= 146.14 - 34.00) g/mol from the molecular weight 146.14 of adipic acid, and a contribution of 168.25 (= 202.25 - 34.00) g/mol from the molecular weight 202.25 of sebacic acid.

Physical Properties of Copolyamide Resin

From the viewpoint of molding processability, the melting point of the copolyamide resin measured by differential scanning calorimetry (DSC) is preferably from 170 to 240°C, more preferably from 175 to 230°C, even more preferably from 180 to 220°C, and particularly preferably from 180 to 210°C. The melting point of the copolyamide resin measured by DSC can be increased or decreased by adjusting the proportions of the structural units, the molecular weight of the copolyamide resin, and the like.
From the viewpoint of the transparency of a molded article, the heat of fusion (enthalpy change upon melting) ΔH corresponding to the melting point is preferably 40 J/g or less, more preferably from 1 to 40 J/g, even more preferably from 5 to 40 J/g, still more preferably from 5 to 30 J/g, and particularly preferably from 5 to 20 J/g.
In the present specification, the melting point measured by DSC is the temperature of the endothermic peak maximum in the DSC curve of the second heating scan, when the copolyamide resin is heated to 300°C at a rate of 10°C/min under a nitrogen gas atmosphere, held at the temperature for 1 minute, then cooled to 30°C at a rate of 10°C/min, and then reheated to 300°C at a rate of 10°C/min. The heat of fusion corresponding to the melting point is calculated from the endothermic peak in the DSC curve of the second heating scan.
From the viewpoint of molding processability, the crystallization temperature of the copolyamide resin measured by differential scanning calorimetry (DSC) is preferably from 115 to 195°C, more preferably from 115 to 170°C, even more preferably from 115 to 160°C, and particularly preferably from 115 to 150°C. The crystallization temperature of the copolyamide resin measured by DSC can be increased or decreased by adjusting the proportions of the structural units, the molecular weight of the copolyamide resin, and the like.
In the present specification, the crystallization temperature measured by DSC is the temperature of the exothermic peak maximum in the DSC curve of the cooling scan, when the copolyamide resin is heated under a nitrogen gas atmosphere to 300°C at a rate of 10°C/min, held at the temperature for 1 minute, and then cooled to 30°C at a rate of 10°C/min.
The copolyamide resin is preferably a random copolymer from the viewpoint of achieving a preferred melting point or crystallization temperature.
The random copolymer is a copolymer in which the structural units A and B are arranged in a random manner. Usually, a copolyamide resin produced by mixing and polymerizing monomers corresponding to the units is a random copolymer. On the other hand, a copolyamide resin produced by, for example, mixing a polyamide resin A obtained by polymerizing a monomer used as a raw material for the structural unit A and a polyamide resin B obtained by polymerizing a monomer used as a raw material for the structural unit B, and further polymerizing the mixture is usually not a random copolymer but a block copolymer. The block copolymer is a copolymer formed by preparing blocks in which a certain number of the structural units A or a certain number of the structural units B are continuously arranged and polymerizing these blocks.
The random copolymer can also be confirmed by examining the proportion of the bonding of each structural unit from a $^{13}$C-NMR spectrum using a nuclear magnetic resonance apparatus.
The biomass content of the copolyamide resin measured in accordance with ASTM D6866 is preferably 40% or more and more preferably 50% or more. The biomass content can be determined by measuring the amount of radiocarbon ($^{14}$C) contained in the copolyamide resin. Specifically, the biomass content is 0% when all carbons in the copolyamide resin are derived from fossil materials, and is 100% when all carbons in the copolyamide resin are derived from biomass.
The proportion (by mass) of a biomass raw material in the copolyamide resin is preferably 40% or more and more preferably 50% or more. The proportion of the biomass raw material is the proportion of the charged amount (mass) of a biomass-derived raw material relative to 100 mass% of the total charged amount of raw materials on the assumption that

the raw materials for the copolyamide resin are completely reacted. The upper limit of the proportion of the biomass raw material is 100% and can be, for example, 90% or less.

When the biomass raw material consists of only 1,5-pentamethylenediamine and sebacic acid, the proportion of the biomass raw material is the proportion of the charged amounts of 1,5-pentamethylenediamine and sebacic acid relative to 100 mass% of the total charged amount of the raw materials. In the Examples, the proportion of the biomass raw material was calculated based on a contribution of 100.18 (= 102.18 - 2.00) g/mol in the molecular weight 102.18 of 1,5-pentamethylenediamine, a contribution of 112.14 (= 146.14 - 34.00) g/mol in the molecular weight 146.14 of adipic acid, and a contribution of 168.25 (= 202.25 - 34.00) g/mol in the molecular weight 202.25 of sebacic acid.

Method for Producing Copolyamide Resin

For production of the copolyamide resin, a known polymerization method, such as melt polymerization, solution polymerization, interfacial polymerization, solid-phase polymerization, or a combination of these, can be used. Usually, melt polymerization, which is carried out at a temperature higher than the melting point of the resulting copolyamide resin, is preferably used. In addition, a known polymerization apparatus can be used for production of the copolyamide resin. The copolyamide resin can be produced by a batch system, a continuous system, or the like, by appropriately combining operations under normal pressure, reduced pressure, and increased pressure, as necessary. For example, monomers used as raw materials for the structural units A and B can be introduced at once.

The production method is not particularly limited; however, the copolyamide resin has a high viscosity, and thus, in some cases, from the viewpoint of avoiding difficulty in extraction during polymerization, for example, a copolyamide resin having a low viscosity is synthesized by melt polymerization, and then the copolyamide resin having an increased viscosity can be produced by solid-phase polymerization.

Applications of Copolyamide Resin

Since the bio proportion can be increased, the copolyamide resin can contribute to achieving, for example, Goal 12 of Sustainable Development Goals (SDGs) and provides excellent transparency when formed into a molded article. The copolyamide resin can be used for a polyamide resin composition and a molded article, such as a film or a monofilament.

Polyamide Resin Composition

One aspect of the present invention is a polyamide resin composition containing the copolyamide resin. The polyamide resin composition may contain an additional component besides the copolyamide resin as long as the effects of the present invention are not impaired.

Examples of the additional component include polyamide resins other than the copolyamide resin; any resins other than polyamide resins, for example, modified or unmodified polyolefin resins; and function-imparting agents, such as plasticizers, heat-resistant agents, foaming agents, antioxidants, ultraviolet absorbers, weather-resistant agents, crystal nucleating agents, crystallization accelerators, mold release agents, lubricants, antistatic agents, antifogging agents, flame retardants, flame retardant aids, pigments, and dyes. The polyamide resin composition containing any of these additional components can be formed into a molded article, such as a pellet, a film, or a monofilament.

The method for producing the polyamide resin composition is not particularly limited, and the polyamide resin composition can be produced, for example, by mixing the copolyamide resin and an additional component using a known melt-kneading machine, such as a single-screw or twin-screw extruder, a Banbury mixer, a kneader, or a mixing roll.

Molded Article

One aspect of the present invention is a molded article containing the copolyamide resin or the polyamide resin composition. The method for producing the molded article is not particularly limited, and examples of the method include injection molding, press molding, blow molding, extrusion molding, and rotational molding.

Applications of Molded Article

By taking advantage of its excellent properties, the molded article containing the copolyamide resin or the polyamide resin composition is used for various applications, such as electronic components, electrical components, household goods, office supplies, automobile/vehicle-related components, building materials, and sporting goods, in addition to films and monofilaments.

The molded article is preferably used for applications of electronic components, for example, connectors, coils,

sensors, LED lamps, sockets, resistors, relay cases, small switches, coil bobbins, capacitors, variable capacitor cases, optical pickup chassis, oscillators, various terminal boards, transformers, plugs, printed circuit boards, tuners, speakers, microphones, headphones, small motors, magnetic head bases, power modules, semiconductors, liquid crystals, FDD carriages, FDD chassis, motor brush holders, transformer members, parabolic antennas, and computer-related components.

The molded article is preferably used for applications of electrical components, for example, generators, electric motors, potential transformers, current transformers, voltage regulators, rectifiers, inverters, relays, power contacts, switches, circuit breakers, knife switches, multipole rods, electrical components, motor cases, housings and internal components of notebook computers, housings and internal components of CRT displays, and housings and internal components of printers; housings and internal components of portable terminals, such as mobile phones, mobile personal computers, and handheld mobile devices; and various gears, various cases, and cabinets.

The molded article is preferably used for applications of household goods and office supplies, for example, VTR parts, television parts, irons, hair dryers, rice cooker parts, and microwave oven parts; parts of audio and video equipment, such as audio parts, audio equipment, LaserDisc (trade name), compact disc, and DVD; lighting parts, refrigerator parts, air conditioner parts, typewriter parts, word processor parts, housings of electronic equipment such as personal computers and notebook computers, office computer-related parts, telephone device-related parts, facsimile-related parts, copying machine-related parts, cleaning jigs, motor components, lighters, typewriters, microscopes, binoculars, cameras, and clocks.

The molded article is preferably used for applications of automobile/vehicle-related components, for example, alternator terminals, alternator connectors, IC regulators, potentiometer bases for light dimmers, various valves such as exhaust gas valves, various pipes, hoses, and tubes for fuel-related systems, cooling systems, brake systems, wiper systems, exhaust systems, and intake systems, air intake nozzle snorkels, intake manifolds, fuel pumps, engine cooling water joints, carburetor main bodies, carburetor spacers, exhaust gas sensors, cooling water sensors, oil temperature sensors, brake pad wear sensors, throttle position sensors, crankshaft position sensors, air flow meters, brake pad wear sensors, battery peripheral parts, thermostat bases for air conditioners, heating hot-air flow control valves, brush holders for radiator motors, water pump impellers, turbine vanes, wiper motor-related parts, distributors, starter switches, starter relays, wire harnesses for transmissions, oil pans for transmissions, window washer nozzles, air conditioner panel switch substrates, coils for fuel-related electromagnetic valves, various connectors, such as wire harness connectors, SMJ connectors, PCB connectors, door grommet connectors, and fuse connectors, horn terminals, insulation plates for electrical components, step motor rotors, lamp sockets, lamp reflectors, lamp housings, brake pistons, solenoid bobbins, engine oil pans, engine oil filters, ignition device cases, torque control levers, seat belt parts, resistor blades, washer levers, window regulator handles, knobs of window regulator handles, passing light levers, sun visor brackets, instrument panels, airbag peripheral parts, door pads, pillars, console boxes, various motor housings, roof rails, fenders, garnishes, roof panels, hood panels, trunk lids, door mirror stays, spoilers, hood louvers, wheel covers, wheel caps, grille apron cover frames, lamp bezels, door handles, door moldings, rear finishers, and wipers.

The molded article is preferably used for building material applications, for example, wall, roof, and ceiling material-related components of civil engineering buildings; window material-related components, heat insulating material-related components, flooring material-related components, base isolation/vibration damping member-related components, and lifeline-related components.

The molded article is preferably used for sporting goods applications, for example, golf-related goods, such as golf clubs and shafts; body protective goods for sports, such as masks, helmets, chest pads, elbow pads, and knee pads for American football, baseball, softball, and the like; shoe-related goods, such as sports shoe soles; fishing gear-related goods, such as fishing rods and fishing lines; goods related to summer sports, such as surfing; goods related to winter sports, such as skiing and snowboarding; and other indoor and outdoor sports-related goods.

Film

Another aspect of the present invention is a film containing the copolyamide resin or the polyamide resin composition. The film may be a monolayer film formed only of a layer of the copolyamide resin or may be a laminated film of two or more layers including a layer of the copolyamide resin and an additional layer. Examples of the additional layer include a layer containing a resin other than the copolyamide resin, such as a thermoplastic resin or a thermosetting resin; and a layer formed of a metal, such as aluminum.

Examples of the resin other than the copolyamide resin include ethylene-based resins, such as a low-density polyethylene, a linear low-density polyethylene, an ionomer, an ethylene-vinyl alcohol copolymer (EVOH), an ethylene-acrylic acid copolymer, an ethylene-vinyl acetate copolymer, an ethylene-acrylate copolymer, and an ethylene-methacrylic acid copolymer; polyolefins such as a polypropylene, modified polyolefins, polyesters, poly(vinyl alcohol), polyamides other than the copolyamide resin, and polyamide elastomers; and biomass plastics, such as polylactic acid (PLA) and polyhydroxyalkanoate (PHA).

The thickness of the film can be appropriately selected according to the application. For example, the monolayer film has a thickness of preferably from 5 to 200 μm, and more preferably from 10 to 50 μm. The laminated film has an overall thickness of preferably from 10 to 1000 μm and more preferably from 20 to 500 μm, and the thickness of a layer containing the copolyamide resin or the polyamide resin composition is preferably from 5 to 100 μm and more preferably 10 to 50 μm.
The film may be an unstretched film or a stretched film obtained by stretching the unstretched film. The stretching method is not particularly limited, and examples include a uniaxial stretching method using a heating roll, a simultaneous biaxial stretching method by a tubular method, and a sequential biaxial stretching method using a heating roll or a tenter.

Method for Producing Film

The method for producing the film is not particularly limited, and for example, a known production method can be applied. For example, the copolyamide resin or the polyamide resin composition is melt-kneaded with an extruder, and a monolayer film can be produced by a molding method, such as a T-die molding method, an air-cooled inflation molding method or water-cooled inflation molding method, or a triple bubble molding method.
The laminated film may be directly laminated by coextrusion, lamination, or the like, or may be laminated through an adhesive or an adhesive resin layer. Coextrusion provides excellent productivity and thus is preferred.
In the case of producing the laminated film by a coextrusion method, the film is produced as a substantially non-oriented unstretched film, for example, by using a coextrusion T-die molding method in which the copolyamide resin or its composition, a thermoplastic resin or its composition, and the like are melted in separate extruders, and the melts are continuously extruded through T-dies and molded into a film form while being cooled with a casting roll; a coextrusion air-cooled inflation molding method in which the melts are continuously extruded through annular dies and cooled with air; or a coextrusion water-cooled inflation molding method in which the melts are continuously extruded through annular dies and cooled by contact with water.
Among these methods, in the air-cooled inflation molding method and the water-cooled inflation molding method (also referred to simply as "inflation method" or "inflation molding"), equipment is simple and the width of the film can be modified simply by adjusting the blow-up ratio, and thus the film with good workability and high productivity can be produced. When the copolyamide resin is used in air- or water-cooled inflation molding or in coextrusion air- or water-cooled inflation molding, the occurrence of curling of the film can be suppressed. In particular, when the copolyamide resin is used for producing a multilayer film including a layer containing the copolyamide resin and a low melting point thermoplastic resin layer by the coextrusion air-cooled or water-cooled inflation molding method, thermal deterioration of the film and the occurrence of curling of the film can be suppressed, which is preferred.
The conditions for molding the inflation-molded film are not particularly limited; however, the resin temperature is preferably from the melting point of the raw material resin to be used to less than 300°C. In the present invention, the resin temperature can be, for example, from 160°C to 250°C and preferably from 160°C to 220°C. The blow-up ratio (also referred to as blow ratio) refers to the ratio of the maximum diameter of the bubble to the diameter of the die. The blow-up ratio is preferably from 1.1 to 3.0 and more preferably from 1.2 to 2.5. The take-up speed is determined by the thickness and width of the film and the extrusion amount, and can be adjusted in a range such that film formation stability can be maintained. In general, the take-up speed is preferably from 1 to 150 m/min and more preferably from 5 to 100 m/min.
Furthermore, the film can be subjected to a surface treatment, such as corona discharge treatment, plasma treatment, flame treatment, or acid treatment for improving printability, lamination properties, or adhesive applicability. After completion of such a treatment, the film may optionally be subjected to secondary processing, such as printing, lamination, coating with an adhesive, or heat sealing, and then can be used for the intended application.

Applications of Film

The film has excellent handling properties and work efficiency during heat molding and excellent transparency, and thus can be used as a food packaging film. Also, the film is suitable for inflation-molded film applications. Furthermore, the film can be used for various applications exemplified as those of the molded article, such as electronic components, electrical components, household goods, office supplies, automobile/vehicle-related components, building materials, and sporting goods.

Monofilament

Yet another aspect of the present invention is a monofilament containing the copolyamide resin or the polyamide resin composition. The diameter of the monofilament is not particularly limited, but is preferably from 0.5 to 20 mm and more preferably from 1 to 5 mm. The monofilament may be a continuous fiber or a short fiber.

Method for Producing Monofilament

The monofilament is produced by a known production method using the copolyamide resin or the polyamide resin composition. Examples of the method for producing the monofilament include a method in which pellets of the polyamide resin are melted by an extruder or the like, and the melt is extruded from a spinning nozzle and cooled in a bath containing coolant, such as water or trichloroethylene, thereby producing an undrawn filament. In this case, the distance from the filament outlet of the spinning nozzle to the surface of the coolant is preferably maintained at about 10 to 300 mm.

The undrawn filament may be further subjected to drawing and heat setting. Here, the drawing is preferably a two-stage drawing, in which the filament is drawn in two stages.

In the first stage of the two-stage drawing, the undrawn filament is drawn in water vapor or hot water at a draw ratio of preferably from 2 to 5 and more preferably from 3 to 4. When the draw ratio is in this range, the knot strength tends to be further improved.

In the case of drawing in water vapor, the temperature range is preferably from 95 to 120°C and more preferably from 100 to 110°C. When the water vapor temperature is in this temperature range, the knot strength and transparency of the resulting monofilament tend to be further improved.

In the case of drawing in hot water, the hot water temperature is preferably from 50 to 95°C and more preferably 60 to 90°C. When the hot water temperature is in this range, the knot strength and transparency of the resulting monofilament tend to be further improved.

In the second stage drawing, the filament is drawn in a gas atmosphere at a draw ratio of preferably from 1.1 to 2.5 and more preferably from 1.2 to 2.5. The gas is not particularly limited, and examples of the gas include inert gases, such as helium, nitrogen, and argon, and air. The temperature of the gas atmosphere in the second stage drawing is preferably from 120 to 300°C and more preferably from 180 to 250°C. When the temperature range and the draw ratio are as described above in the second stage drawing, the knot strength and transparency of the resulting monofilament tend to be further improved.

The monofilament drawn in two stages is preferably subjected to heat setting. The monofilament drawn in two stages can be subjected to heat setting in a gas atmosphere preferably at 160 to 350°C and more preferably at 160 to 320°C while being subjected to relaxation treatment of 0 to 10%. In the case of this temperature range, the knot strength tends to be further improved.

In the two-stage drawing and heat setting described above, the total draw ratio is in a range of preferably from 4.0 to 7.0, more preferably from 4.5 to 6.5, and even more preferably from 5.5 to 6.0.

Applications of Monofilament

The monofilament has low water absorption and excellent abrasion resistance and thus can be used as, for example, a filament, a multifilament, and a net structure for applications, such as fishery, industrial use, clothing, and medical use. Furthermore, the monofilament can be used for various applications exemplified as those of the molded article, such as electronic components, electrical components, household goods, office supplies, automobile/vehicle-related components, building materials, and sporting goods.

Examples

The present invention will be described in more detail with reference to Examples and Comparative Examples, but the present invention is not limited to these Examples.

Measurement of Physical Properties

(1) Melting Point (Tm) and Heat of Fusion (ΔH)

Using model DSC7020 available from Hitachi High-Tech Science Corporation, the polyamide resins of Examples and Comparative Examples were each heated to 300°C at a rate of 10°C/min under a nitrogen gas atmosphere, held at the temperature for 1 minute, then cooled to 30°C at a rate of 10°C/min, and then reheated to 300°C at a rate of 10°C/min. The temperature of the endothermic peak maximum in the DSC curve of the second heating scan was determined as the melting point (Tm), and the corresponding heat of fusion was determined as ΔH (unit: J/g). A molded article having a ΔH of 40 J/g or less was determined to have low crystallinity and excellent transparency.

(2) Crystallization Temperature (Tc)

Using model DSC7020 available from Hitachi High-Tech Science Corporation, polyamide resins of Examples

and Comparative Examples were each heated to 300°C at a rate of 10°C/min under a nitrogen gas atmosphere, held at the temperature for 1 minute, and then cooled to 30°C at a rate of 10°C/min. The temperature of the exothermic peak maximum in the DSC curve of the cooling scan was determined as the crystallization temperature (Tc).

(3) Calculation of Proportions of Structural Units and Biomass Raw Materials

The proportions of the structural units and the biomass raw materials in polyamide resins of Examples and Comparative Examples were calculated from the charged amounts of raw materials on the assumption that the raw materials for the polyamide resin were completely reacted. The proportion of the biomass raw materials is the proportion of the charged amount (mass) of biomass-derived raw materials relative to 100 mass% of the total charged amount of raw materials on the assumption that the raw materials for the polyamide resin are completely reacted.

Specifically, in consideration of elimination of condensed water eliminated by polymerization, the proportions of the structural units and the biomass raw materials were calculated based on a contribution of 100.18 (= 102.18 - 2.00) g/mol in the molecular weight 102.18 of 1,5-pentamethylenediamine, a contribution of 112.14 (= 146.14 - 34.00) g/mol in the molecular weight 146.14 of adipic acid, and a contribution of 168.25 (= 202.25 - 34.00) g/mol in the molecular weight 202.25 of sebacic acid. The proportion of the biomass raw materials was calculated as the proportion of the structural units derived from biomass-derived 1,5-pentamethylenediamine and sebacic acid relative to 100 mass% of all structural units in the polymer.

(4) Equilibrium Water Absorption

Pellets of each of the polyamide resins of Examples and Comparative Examples were used. An unstretched polyamide sheet of 20 mm $\times$ 80 mm $\times$ 2 mm was formed using a hot press machine available from Shinto Metal Industries, Ltd. by preheating the pellets at a temperature of the melting point + 30°C for 3 minutes, then hot-pressing at 5 MPa for 1 minute, and then cold-pressing at 30°C and 5 MPa for 3 minutes. The resulting sheet was vacuum-dried at 80°C for 48 hours, and the mass thereof was measured. Thereafter, the sheet was immersed in water at 23°C for 800 hours, and then removed therefrom. The water on the sheet surface was absorbed and removed using a cloth, and then the mass of the sheet was measured. From the sheet masses before and after immersion in water, the equilibrium water absorption was calculated by the following equation.

Equilibrium water absorption = [(sheet mass after immersion in water - sheet mass before immersion in water)/sheet mass before immersion in water] $\times$ 100

A sheet having an equilibrium water absorption of 14.5% or less was determined to have low water absorbability.

(5) Abrasion Loss

Pellets of each of the polyamide resins of Examples and Comparative Examples were used. Two unstretched polyamide sheets of 45 mm $\times$ 45 mm $\times$ 1 mm were formed using a hot press machine available from Shinto Metal Industries, Ltd. by preheating the pellets at a temperature of the melting point + 30°C for 3 minutes, then hot-pressing at 5 MPa for 1 minute, and then cold-pressing at 30°C and 5 MPa for 3 minutes. The resulting sheets were vacuum-dried at 80°C for 48 hours and sealed in an aluminum bag. One of the two sheets was used as a sample for an abrasion test, while the other sheet was used as a sample for water absorption measurement to correct the water absorption of the sample (dry sheet) during the abrasion test.

Firstly, the aluminum bag was opened, and the masses of the two samples were measured. A polishing paper of G (garnet)-50 cut into 157 mm in length and 12 mm in width was attached to the abrasion ring of a reciprocating flat abrasion tester available from Suga Test Instruments Co., Ltd., and the abrasion test sample was tested under conditions of a load of 3000 g, a stroke of 30 mm, and 120 reciprocations. After the test, the resin powder generated by abrasion and remaining on the sample was brushed off, and then the mass of the sample was measured. Almost at the same time, the mass of the sample for water absorption measurement was measured. The abrasion loss was determined as the mass obtained by adding the mass increment (apparent water absorption) of the sample for water absorption measurement to the mass difference of the sample for the abrasion test before and after the abrasion test.

A sample having an abrasion loss of less than 11.6 mg was determined to have excellent abrasion resistance.

Raw Materials Used

(1) Diamine
1,5-Pentamethylenediamine: available from CJ Research (biomass-derived, purity: 99.90 mass%)
(2) Dicarboxylic Acid

Adipic acid: available from Asahi Kasei Corporation (fossil material-derived, purity: 99.8 mass%)
Sebacic acid: available from Casda Biomaterials (biomass-derived, purity: 99.5 mass%)

(3) Organic Solvent
2-Propanol: available from FUJIFILM Wako Pure Chemical Corporation (purity: 99.7 mass%)

Synthesis of Nylon 56 Salt

In a 700-L reaction vessel, 32.42 kg of adipic acid and 273 kg of 2-propanol were added and heated to 40°C to dissolve adipic acid. Then, 22.67 kg of 1,5-pentamethylenediamine was slowly added over 71 minutes. Although heat of neutralization and heat of crystallization were generated, the solution temperature was controlled to be in a range of 40°C to 50°C during the addition. After completion of the addition of 1,5-pentamethylenediamine, the solution was stirred for 30 minutes while the temperature was maintained at 35°C to 40°C, and then the solution was cooled and stirred for 2 hours while the temperature was maintained at 0°C to 5°C. Precipitated nylon 56 salt was obtained in the form of a filter cake and then dried at 60°C under reduced pressure for 48 hours, to produce 54.8 kg of nylon 56 salt.

Synthesis of Nylon 510 Salt

In a 700-L reaction vessel, 24.27 kg of sebacic acid and 184 kg of 2-propanol were added and heated to 40°C to dissolve sebacic acid. Then, 12.27 kg of 1,5-pentamethylenediamine was slowly added over 65 minutes. Although heat of neutralization and heat of crystallization were generated, the solution temperature was controlled to be in a range of 40°C to 50°C during the addition. After completion of the addition of 1,5-pentamethylenediamine, the solution was stirred for 30 minutes while the temperature was maintained at 35°C to 40°C, and then the solution was cooled and stirred for 2 hours while the temperature was maintained at 0°C to 5°C. Precipitated nylon 510 salt was obtained in the form of a filter cake and then dried at 60°C under reduced pressure for 48 hours, to produce 36.3 kg of nylon 510 salt.

Example 1

In a 1-L polymerization vessel, 200.0 g of the nylon 56 salt, 50.0 g of the nylon 510 salt, and 50.0 g of degassed ion-exchanged water were charged. After the inside of the polymerization vessel was purged with nitrogen, the vessel was sealed, and the temperature was increased to 200°C. Then, the pressure inside the polymerization vessel was controlled to 1.3 MPa while the mixture was stirred, and polymerization was carried out for 3 hours. The pressure inside the polymerization vessel was released to atmospheric pressure over 40 minutes while the temperature inside the polymerization vessel was increased to 280°C. After the pressure was released, polymerization was carried out under a nitrogen stream at 200 mL/min for 2 hours. The stirrer was then stopped, and nitrogen was introduced to increase the pressure to 1.0 MPa. After the pressurization, the resulting polyamide was taken out in the form of a strand and pelletized. The polyamide pellets were dried under reduced pressure at 90°C for 48 hours, to produce a copolyamide resin of Example 1.

The randomness of the copolyamide resin of Example 1 was confirmed by a $^{13}$C-NMR spectrum, and the copolyamide resin was found to be a random copolymer.

Example 2

In a 1-L polymerization vessel, 175.0 g of the nylon 56 salt, 75.0 g of the nylon 510 salt, and 50.0 g of degassed ion-exchanged water were charged. After the inside of the polymerization vessel was purged with nitrogen, the vessel was sealed, and the temperature was increased to 200°C. Then, the pressure inside the polymerization vessel was controlled to 1.3 MPa while the mixture was stirred, and polymerization was carried out for 3 hours. The pressure inside the polymerization vessel was released to atmospheric pressure over 40 minutes while the temperature inside the polymerization vessel was increased to 250°C. After the pressure was released, polymerization was carried out under a nitrogen stream at 200 mL/min for 2 hours. The stirrer was then stopped, and nitrogen was introduced to increase the pressure to 1.0 MPa. After the pressurization, the resulting polyamide was taken out in the form of a strand and pelletized. The polyamide pellets were dried under reduced pressure at 90°C for 48 hours to produce a copolyamide resin of Example 2.

The randomness of the copolyamide resin of Example 2 was confirmed by a $^{13}$C-NMR spectrum, and the

copolyamide resin was found to be a random copolymer.

Example 3

In a 1-L polymerization vessel, 150.0 g of the nylon 56 salt, 100.0 g of the nylon 510 salt, and 50.0 g of degassed ion-exchanged water were charged, and polymerization was carried out in the same manner as in Example 2. The resulting polyamide was pelletized to produce a copolyamide resin of Example 3.

Example 4

In a 1-L polymerization vessel, 125.0 g of the nylon 56 salt, 125.0 g of the nylon 510 salt, and 50.0 g of degassed ion-exchanged water were charged, and polymerization was carried out in the same manner as in Example 2. The resulting polyamide was pelletized to produce a copolyamide resin of Example 4.

Example 5

In a 1-L polymerization vessel, 100.0 g of the nylon 56 salt, 150.0 g of the nylon 510 salt, and 50.0 g of degassed ion-exchanged water were charged, and polymerization was carried out in the same manner as in Example 2. The resulting polyamide was pelletized to produce a copolyamide resin of Example 5.

Example 6

In a 1-L polymerization vessel, 75.0 g of the nylon 56 salt, 175.0 g of the nylon 510 salt, and 50.0 g of degassed ion-exchanged water were charged, and polymerization was carried out in the same manner as in Example 2. The resulting polyamide was pelletized to produce a copolyamide resin of Example 6.

Example 7

In a 1-L polymerization vessel, 50.0 g of the nylon 56 salt, 200.0 g of the nylon 510 salt, and 50.0 g of degassed ion-exchanged water were charged, and polymerization was carried out in the same manner as in Example 2. The resulting polyamide was pelletized to produce a copolyamide resin of Example 7.

Comparative Example 1

In a 1-L polymerization vessel, 225.0 g of the nylon 56 salt, 25.0 g of the nylon 510 salt, and 50.0 g of degassed ion-exchanged water were charged, and polymerization was carried out in the same manner as in Example 1. The resulting polyamide was pelletized to produce a copolyamide resin of Comparative Example 1.

Comparative Example 2

In a 1-L polymerization vessel, 25.0 g of the nylon 56 salt, 225.0 g of the nylon 510 salt, and 50.0 g of degassed ion-exchanged water were charged, and polymerization was carried out in the same manner as in Example 2. The resulting polyamide was pelletized to produce a copolyamide resin of Comparative Example 2.

Table 1 shows the mass ratio of structural units calculated from the charged amounts of the raw materials, the proportions of the structural units derived from monomer components, and the proportion of the biomass raw material, as well as the DSC measurement data in Examples 1 to 7 and Comparative Examples 1 and 2.

[Table 1]

| | Example 1 | Example 2 | Example 3 | Example 4 | Example 5 | Example 6 | Example 7 | Comparative Example 1 | Comparative Example 2 |
|---|---|---|---|---|---|---|---|---|---|
| Structural unit 56/mass% | 80 | 69 | 59 | 49 | 39 | 29 | 20 | 90 | 10 |
| Structural unit 510/mass% | 20 | 31 | 41 | 51 | 61 | 71 | 80 | 10 | 90 |
| 1,5-Pentamethylenediamine-derived structural unit/mass% | 45 | 44 | 43 | 42 | 41 | 40 | 39 | 46 | 38 |
| Adipic acid-derived structural unit/mass% | 42 | 37 | 31 | 26 | 21 | 16 | 10 | 47 | 5 |
| Sebacic acid-derived structural unit/mass% | 13 | 19 | 26 | 32 | 38 | 44 | 50 | 6 | 57 |
| Total | 100 | 100 | 100 | 100 | 100 | 100 | 100 | 100 | 100 |
| Proportion % of biomass raw material | 58 | 63 | 69 | 74 | 79 | 84 | 90 | 53 | 95 |
| Melting point (Tm) °C | 234 | 217 | 207 | 193 | 184 | 190 | 199 | 244 | 207 |
| Crystallization temperature (Tc) °C | 180 | 163 | 148 | 127 | 116 | 136 | 147 | 197 | 154 |
| Heat of fusion (ΔH) J/g | 36 | 30 | 18 | 10 | 6 | 24 | 39 | 42 | 43 |

Table 2 shows equilibrium water absorption and abrasion loss data of the copolyamide resins of Example 2 and Comparative Examples 1 and 2.

[Table 2]

| | Structural unit | Equilibrium water absorption/ immersion at 23°C (%) | Abrasion loss (mg) |
|---|---|---|---|
| Example 2 | PA56/510 = 69/31 | 13.2 | 11.5 |
| Comparative Example 1 | PA56/510 = 90/10 | 14.9 | 10.2 |
| Comparative Example 2 | PA56/510 = 10/90 | 6.7 | 11.6 |

As is clear from Table 1, in Examples 1 to 7, in which the structural unit A derived from the reaction product of equimolar amounts of pentamethylenediamine and adipic acid is contained, the structural unit B derived from the reaction product of equimolar amounts of pentamethylenediamine and sebacic acid is contained, and the mass ratio of the structural unit A/the structural unit B is from 85/15 to 15/85, the heat of fusion, i.e., enthalpy change ΔH upon melting is low, crystallinity is lower, and transparency is excellent, as compared with Comparative Examples 1 and 2. Among these, in Example 4, in which the mass ratio of the structural unit A/the structural unit B was 49/51, and in Example 5, in which the mass ratio of the structural unit A/the structural unit B was 39/61, ΔH was much lower and transparency was particularly excellent.

Industrial Applicability

The copolyamide resin of the present invention can be suitably used for applications, such as molded articles and food packaging films produced by various molding methods. The copolyamide resin can contribute to achieving, for example, Goal 12 of Sustainable Development Goals (SDGs).

## Claims

**1.** A copolyamide resin comprising:

a structural unit A derived from a reaction product of equimolar amounts of pentamethylenediamine and adipic acid, and represented by Formula (A):

[Chem. 1]

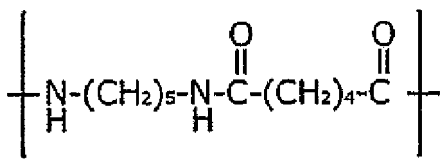

(A)

and
a structural unit B derived from a reaction product of equimolar amounts of pentamethylenediamine and sebacic acid, and represented by Formula (B):

[Chem. 2]

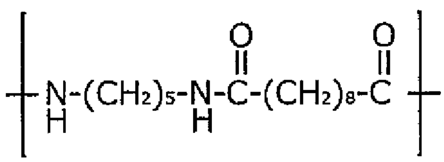

(B)

wherein
a mass ratio of the structural unit A/the structural unit B is from 85/15 to 15/85.

2. The copolyamide resin according to claim 1, wherein the copolyamide resin has a melting point of from 170 to 240°C as measured by DSC.

3. The copolyamide resin according to claim 1, wherein the copolyamide resin has a crystallization temperature of from 115 to 195°C as measured by DSC.

4. A polyamide resin composition comprising the copolyamide resin described in any one of claims 1 to 3.

5. A molded article comprising the copolyamide resin described in any one of claims 1 to 3.

6. A film comprising the copolyamide resin described in any one of claims 1 to 3.

7. A monofilament comprising the copolyamide resin described in any one of claims 1 to 3.

**INTERNATIONAL SEARCH REPORT**

International application No.
**PCT/JP2024/014944**

**A. CLASSIFICATION OF SUBJECT MATTER**

***C08G 69/26***(2006.01)i
FI: C08G69/26

According to International Patent Classification (IPC) or to both national classification and IPC

**B. FIELDS SEARCHED**

Minimum documentation searched (classification system followed by classification symbols)

C08G69,C08L77

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2010/113736 A1 (TORAY INDUSTRIES, INC.) 07 October 2010 (2010-10-07) claims, paragraphs [0009], [0013], [0083], reference example 11 | 1-7 |
| Y | WO 2015/076233 A1 (TORAY INDUSTRIES, INC.) 28 May 2015 (2015-05-28) claims, paragraph [0039], examples 5, 7 | 1-7 |
| Y | JP 2016-069557 A (TORAY INDUSTRIES, INC.) 09 May 2016 (2016-05-09) claims, paragraph [0008], examples 11, 16 | 1-7 |
| Y | JP 2003-506565 A (ALLIEDSIGNAL INC.) 18 February 2003 (2003-02-18) paragraph [0002] | 1-7 |
| Y | JP 2000-63512 A (UBE INDUSTRIES, LTD.) 29 February 2000 (2000-02-29) paragraph [0002] | 1-7 |
| Y | JP 2020-152858 A (MITSUI CHEMICALS, INC.) 24 September 2020 (2020-09-24) paragraph [0052] | 1-7 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **17 June 2024** | **09 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

INTERNATIONAL SEARCH REPORT

International application No.
**PCT/JP2024/014944**

C. DOCUMENTS CONSIDERED TO BE RELEVANT

| Category* | Citation of document, with indication, where appropriate, of the relevant passages | Relevant to claim No. |
|---|---|---|
| Y | JP 2020-529494 A (ADVANSIX RESINS & CHEMICALS LLC) 08 October 2020 (2020-10-08) paragraph [0004] | 1-7 |
| Y | JP 2018-44103 A (ASAHI KASEI KABUSHIKI KAISHA) 22 March 2018 (2018-03-22) paragraph [0033] | 1-7 |

Form PCT/ISA/210 (second sheet) (July 2022)

**INTERNATIONAL SEARCH REPORT**
**Information on patent family members**

International application No.
**PCT/JP2024/014944**

| Patent document cited in search report | Publication date (day/month/year) | Patent family member(s) | Publication date (day/month/year) |
|---|---|---|---|
| WO 2010/113736 A1 | 07 October 2010 | US 2012/0016077 A1<br>claims, paragraphs [0010], [0015], [0086], reference example 11<br>WO 2010/113736 A1<br>EP 2415801 A1<br>CN 102449029 A | |
| WO 2015/076233 A1 | 28 May 2015 | (Family: none) | |
| JP 2016-069557 A | 09 May 2016 | (Family: none) | |
| JP 2003-506565 A | 18 February 2003 | US 6022613 A<br>column 1, lines 14-22<br>EP 1204704 A1<br>CA 2376664 A<br>KR 10-2002-0013576 A | |
| JP 2000-63512 A | 29 February 2000 | (Family: none) | |
| JP 2020-152858 A | 24 September 2020 | (Family: none) | |
| JP 2020-529494 A | 08 October 2020 | US 2021/0155753 A1<br>paragraph [0004]<br>WO 2019/027593 A1<br>EP 3661995 A1<br>CN 110914339 A<br>KR 10-2020-0032188 A | |
| JP 2018-44103 A | 22 March 2018 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2022071013 A
- WO 2015076233 A
- JP 2006348057 A
- JP 2007332353 A
- JP 2002223771 A
- JP 2004000114 A
- JP 2004208646 A
- JP 2004290091 A
- JP 2004298034 A
- JP 2002223770 A
- JP 2004222569 A
- JP 2005006650 A
- JP 2019154313 A
- JP 2019205423 A